# EUROPÄISCHE PATENTSCHRIFT

(11) **EP 1 729 077 B1**
(45) Veröffentlichungstag und Bekanntmachung des Hinweises auf die Patenterteilung: **01.02.2012**
(21) Anmeldenummer: 06011129.1
(22) Anmeldetag: 30.05.2006
(51) Int. Cl.: F25J 3/02, C01B 31/18, C01B 3/50

(54) **Verfahren und Vorrichtung zur Gewinnung von Produkten aus Synthesegas**
Process and device for the recovery of products from synthesis gas
Procédé et dispositif pour la récupération de produits d'un gaz de synthèse

(30) Priorität: 03.06.2005 DE 102005025651
(43) Veröffentlichungstag der Anmeldung: 06.12.2006
(73) Patentinhaber: Linde AG, 80331 München (DE)
(72) Erfinder: Lang, Martin, 80804 München (DE)

(56) Entgegenhaltungen:
- DE-A1- 4 325 513
- US-A- 4 478 621
- US-A- 4 566 886
- US-A- 4 608 068
- US-B1- 6 173 585
- BERNINGER R: "FORTSCHRITTE BEI DER H2/CO-TIEFTEMPERATURZERLEGUNG PROGRESS IN H2/CO LOW TEMPERATURE SEPARATION" BERICHTE AUS TECHNIK UND WISSENSCHAFT, LINDE AG, UNTERNEHMENSZENTRALE, UNTERNEHMENSKOMMUNIKATION, WIE, DE, Bd. 62, 1988, Seiten 18-32, XP009045782 ISSN: 0942-332X
- FABIAN R: "DERZEITIGER STAND DER H2-CO-ZERLEGUNG MITTELS TIEFTEMPERATURTECHNIK" BERICHTE AUS TECHNIK UND WISSENSCHAFT, LINDE AG. WIESBADEN, DE, Bd. 55, 1984, Seiten 38-42, XP001205714 ISSN: 0942-332X

## Beschreibung

Gegenstand der Erfindung ist ein Verfahren zur Gewinnung eines gasförmigen Kohlenmonoxidproduktstromes durch Zerlegung eines vorwiegend aus Wasserstoff (H₂) und Kohlenmonoxid (CO) bestehenden Einsatzstoffstroms in einer kryogenen Gaszerlegungseinheit mittels Abkühlung durch indirekten Wärmetausch gegen anzuwärmende Verfahrensströme und einstufiger partieller Kondensation mit anschließender Tieftemperaturfraktionierung des bei der partiellen Kondensation gebildeten und in einem Abscheider von der H₂-reichen, CO-haltigen Gasfraktion abgetrennten CO-reichen, H₂-haltigen Kondensats in einer Trennkolonne, in welcher Flüssig-CO mit Produktreinheit als Sumpfprodukt erzeugt wird, der Verdampfung und/oder Anwärmung der kalten Zerlegungsprodukte und der Verdichtung von gasförmigem CO auf Produktdruck mittels eines eine oder mehrere Verdichtersektionen aufweisenden CO-Verdichters, wobei das Flüssig-CO aus dem Sumpf der Trennkolonne entspannt und gegen abzukühlende Verfahrensströme verdampft, angewärmt und gasförmig dem CO-Verdichter zugeführt wird.

Weiterhin betrifft die Erfindung eine Vorrichtung zur Durchführung des Verfahrens.

Durch unterschiedliche Erzeugungsmethoden, wie z. B. katalytische Dampfreformierung oder Partielle Oxidation, werden aus kohlenwasserstoffhaltigen Ausgangsstoffen, wie Erdgas, Flüssiggas, Naphta, Schweröl oder Kohle, sog. Synthesegas erzeugt, das zum größten Teil aus H₂ und CO besteht, aber auch Methan (CH₄), Wasser (H₂O), Kohlendioxid (CO₂) und andere Komponenten, wie z. B. Stickstoff und Argon enthält. Aus dem Synthesegas werden nach Reinigung und Zerlegung vor allem CO und H₂ als Produkte gewonnen, die in der Industrie in vielfältiger Weise Verwendung finden.

Zur Trennung und Reinigung der beiden Synthesegaskomponenten H₂ und CO werden in Industrieanlagen vor allem kryogene Verfahren eingesetzt. Voraussetzung für die Anwendbarkeit dieser Prozesse ist, dass der der kryogenen Gaszerlegungseinheit zugeführte Einsatzstoffstrom frei ist von Wasser, CO₂ und anderen Verbindungen, die bei den auftretenden niedrigen Temperaturen zur Feststoffbildung, und damit zu einer Verlegung der Wärmetauscher führen würden. Das Synthesegas wird daher einer aus mehreren Schritten bestehenden Reinigung unterzogen, bei der der größte Teil der unerwünschten Stoffe in einer CO₂-Wäsche entfernt wird. Von den verbliebenen Resten wird das Synthesegas in einer sich anschließenden Adsorberstation gereinigt.

Die eingesetzten kryogenen Verfahren sind - je nach der Zusammensetzung des zu trennenden Einsatzstoffstromes und der geforderten Reinheit der Produkte - unterschiedlich in ihrer Art (Kondensationsprozess oder Methanwäsche) und Komplexität. Soll beispielsweise aus einem Einsatzstoffstrom, der durch die Vergasung von Schweröl mittels Partieller Oxidation gewonnen wird, und der nach Trocknung und Kohlendioxidentfernung zu etwa 50% aus CO bzw. H₂ und zu 0,2% aus Methan besteht, ein CO-Produkt erzeugt werden, das den Anforderungen der Essigsäureproduktion genügt, ist es ausreichend, ein einstufiges Kondensationsverfahren mit anschließender H₂-Abtrennung anzuwenden, da lediglich durch die Entfernung des Wasserstoffs aus dem Gasgemisch eine CO-Produktreinheit von >99% erreicht wird. Eine zusätzliche CH₄-Abtrennung ist deshalb nicht notwendig.

Bei diesem Verfahren wird der Einsatzstoffstrom in die kryogene Gaszerlegungseinheit (üblicherweise werden die Apparate der kryogenen Gaszerlegungseinheit in einer wärmeisolierten Einhausung (Cold-Box) angeordnet) geleitet und im Gegenstrom im indirekten Wärmetausch gegen anzuwärmende Verfahrensströme so weit abgekühlt, dass es zu einer Teilkondensation kommt, bei der sich eine CO-reiche Flüssigfraktion und eine H₂-reiche Gasfraktion bilden, die anschließend in einem Abscheider getrennt werden. Die CO-reiche Flüssigkeit, in der noch H₂ gelöst ist, wird nachfolgend einer Trennkolonne (z. B. einer H₂-Strippkolonne) zugeführt, in der H₂ weitgehend abgetrennt wird, so dass am Kolonnensumpf Flüssig-CO mit der geforderten Produktreinheit vorliegt.

Um die für die partielle Kondensation notwendige Temperatur am Abscheider zu erreichen, wird nach dem Stand der Technik, wie er beispielsweise aus der Veröffentlichung "Fortschritte bei der H2/CO-Tieftemperaturzerlegung" (R. Beminger, in Linde Berichte aus Wissenschaft und Technik, Nr. 62, 1988, S. 18-32) bekannt ist, das Flüssig-CO aus dem Sumpf der Trennkolonne entnommen und kälteleistend entspannt. Durch die Entspannung, bei der ein Teil des Flüssig-CO in die Gasphase übergeht, wird die Temperatur weit genug abgesenkt, um im indirekten Wärmetausch (zusammen mit anderen anzuwärmenden Verfahrensströmen) den Einsatzstoffstrom auf die notwendige Temperatur abzukühlen. Das entspannte Flüssig-CO wird gegen die abzukühlenden Verfahrensströme vollständig verdampft und angewärmt. Ein Verdichter bringt das CO anschließend auf den geforderten Produktdruck, bevor es an der Anlagengrenze als CO-Produkt abgegeben wird.

Im Bestreben, die Zerlegung des Einsatzstoffstromes mit Hilfe des Kondensationsprozesses auf möglichst wirtschaftliche Weise durchzuführen, wird der Flüssig-CO-Strom in mindestens zwei Teilströme zerlegt und der CO-Verdichter u. U. mit mehreren Sektionen ausgeführt. Jeder der Teilströme wird kälteleistend entspannt und nach Verdampfung und Anwärmung gasförmig einer anderen Sektion des Verdichters auf deren Saugseite zugeführt. Wenn es die Druckverhältnisse erlauben, kann einer der Teilströme auf den Druck des CO-Produktes entspannt und direkt in dieses eingespeist werden. Die Größe der Teilströme wird bestimmt durch die Forderung, einen möglichst großen Anteil des CO gasförmig dem Verdichter auf möglichst hohem Druckniveau zuzuführen, um eine minimale Verdichterleistung zu erreichen. Gleichzeitig muss ausreichend Flüssig-CO auf niedrigem Druckniveau zur Verfügung gestellt werden, um die Abkühlung des Einsatzstoffstromes auf die gewünschte Temperatur zu ermöglichen.

Aufgabe der vorliegenden Erfindung ist es, ein Verfahren der eingangs genannten Art so zu gestalten, dass die Wirtschaftlichkeit einer CO-Gewinnung nach dem oben beschriebenen Prinzip im Vergleich zum Stand der Technik erhöht ist.

Diese Aufgabe wird erfindungsgemäß verfahrensseitig dadurch gelöst, dass das aus dem Sumpf der Trennkolonne abgezogene Flüssig-CO gegen anzuwärmende Verfahrensströme unterkühlt und anschließend in mehrere Teilströme aufgespalten wird, die jeweils auf ein anderes Druckniveau entspannt, gegen abzukühlende Verfahrensströme verdampft, angewärmt und gasförmig dem CO-Verdichter oder direkt dem CO-Produkt zugeführt werden wobei die Unterkühlung vorzugsweise so groß ist, dass lediglich bei der Entspannung auf das niedrigste Druckniveau ein Flüssigkeits-Gas-Gemisch entsteht, das in einem Abscheider getrennt wird.

Die Größe der CO-Teilströme wird durch die gewünschte Abkühlung des Einsatzstoffstroms vorgegeben. Entsprechend der Abkühlkurve des Einsatzstoffstroms wird gerade so viel Flüssig-CO auf die tieferen Druckniveaus geführt, dass die gewünschte Temperatur am Abscheider erreicht wird.
Durch die Unterkühlung wird die bei den Entspannungen gebildete Gasmenge, die nur einen geringen Beitrag zur Abkühlung des Einsatzstoffstromes leistet, minimiert. Dadurch wird der Anteil der für die Abkühlung des Einsatzstoffstromes notwendigen, auf niedrigen Druckniveaus verdampften und gasförmig dem CO-Verdichter zugeführten Teilströme reduziert und damit der Energiebedarf für die CO-Verdichtung im Vergleich zum Stand der Technik gesenkt.

Eine bevorzugte Ausgestaltung des erfindungsgemäßen Verfahrens sieht vor, dass jeder der CO-Teilströme dem CO-Verdichter gasförmig auf der Saugseite einer anderen Verdichtersektion aufgegeben wird. Wenn ein niedriger Abgabedruck für das CO-Produkt verlangt wird, d. h. wenn ein Druckgefälle zwischen dem CO aus dem Sumpf der Trennkolonne und dem CO-Produkt vorhanden ist, sieht eine weitere Ausgestaltung des erfindungsgemäßen Verfahrens vor, dass die erste Entspannung vorzugsweise auf ein Druckniveau erfolgt, das so gewählt wird, dass das CO nach Verdampfung und/oder Anwärmung gasförmig ohne weitere Verdichtung in das CO-Produkt eingespeist werden kann. Vorraussetzung ist, dass die Verdampfung bei hohem Druck gegen die abzukühlenden Verfahrensströme möglich ist und ausreichend Flüssig-CO für die folgenden Kaskaden zur Verfügung steht, so dass das Synthesegas auf die gewünschte Temperatur abgekühlt werden kann.

Bevorzugt wird die letzte Entspannung auf das Saugdruckniveau (zuzüglich der Druckverluste der Wärmetauscher sowie der Rohrleitungen) der ersten Verdichtersektion des CO-Verdichters durchgeführt, wobei die Spitzenkälte für den Prozess erzeugt wird.

Um die bei der letzten Entspannung entstehenden Flüssig- und Gasphase zu verdampfen und anzuwärmen, werden sie bevorzugt separat in einen Wärmetauscher, der zweckmäßiger Weise als Plattenwärmetauscher ausgeführt ist, eingespeist und intern gemischt, um eine Fehlverteilung zu verhindern. Die Verdampfung und Anwärmung erfolgt in einer gemeinsamen Passage gegen abzukühlende Verfahrensströme; eine Verdampfung und/oder Anwärmung der Gas- und Flüssigfraktion in separaten Passagen ist ebenfalls möglich, jedoch apparativ aufwendiger.

Wird die Trennkolonne bei geringem Druck betrieben, so sieht eine Ausgestaltung des Verfahrens vor, dass ein Teilstrom des Flüssig-CO direkt ohne Entspannung abgezogen, verdampft, angewärmt und dem CO-Verdichter zugeführt oder direkt in das CO-Produkt eingespeist wird.

Um die CO-Ausbeute zu erhöhen, sieht eine weitere Ausgestaltung des erfindungsgemäßen Verfahrens vor, die bei der partiellen Kondensation entstandene H₂-reiche, CO-haltige Gasfraktion aus dem Abscheider zu führen, gegen abzukühlende Verfahrensströme anzuwärmen und in eine nicht zur kryogenen Gaszerlegungseinheit gehörenden Membraneinheit, wie sie dem Fachmann hinreichend bekannt ist, zu leiten, wo der Wasserstoff als sog. Permeat aus dem Gasgemisch weitgehend abgetrennt wird. Das restliche CO/H₂-Gemisch (Retentat) wird zur Erhöhung der CO-Ausbeute in die kryogene Gaszerlegungseinheit zurückgeführt.

Das Retentat wird in der kryogenen Gaszerlegungseinheit bevorzugt gegen anzuwärmende Verfahrensströme abgekühlt und direkt der Trennkolonne, die bevorzugt als H₂-Strippkolonne ausgeführt ist, aufgegeben, wo es nach Abtrennen des Wasserstoffs im Sumpf der Kolonne aufgefangen wird und dort die Menge des Flüssig-CO mit Produktreinheit vergrößert. Ein zusätzlicher Abscheider, wie er z. B. in DE 43 25 513 A1 beschrieben wird, kann entfallen.

Wird der Einsatzstoffstrom aus einem Synthesegas durch Reinigung in einer Adsorberstation gewonnen, sieht eine weitere Ausgestaltung des erfindungsgemäßen Verfahrens vor, zumindest einen Teil des Permeats zur Regenerierung der Adsorber in der Adsorberstation zu verwenden. Zur Erzeugung von Reinwasserstoff wird der Permeatstrom bevorzugt in einer nachgeschalteten Druckwechseladsorptionsanlage (DWA) gereinigt, bevor er an der Anlagengrenze als Produkt abgegeben wird.

Am Kopf der Trennkolonne wird ein H₂-reiches, CO-haltiges Gas (Flash-Gas) abgezogen, dessen Reinheit nicht den Anforderungen entspricht, die üblicherweise an ein Wasserstoffprodukt gestellt werden. Deshalb wird das Flash-Gas erfindungsgemäß gegen abzukühlenden Verfahrensströme angewärmt, bevorzugt in das aus der Membraneinheit kommende Permeat eingespeist und in der nachfolgenden Druckwechseladsorptionsanlage auf Produktqualität gereinigt, wodurch die H₂-Ausbeute erhöht wird.

Für den Fall, dass der Druck des Flash-Gases zur Einspeisung in das Permeat nicht ausreicht, wird er zweckmäßig mittels eines Verdichters auf einen geeignet hohen Wert angehoben.

Zur Regenerierung der Adsorber in der Adsorberstation wird ein Regeneriergas entgegen der Strömungsrichtung des zu reinigenden Rohgases durch die Adsorber geleitet. Stoffe, die während der Reinigungsphase aus dem Rohgasgemisch adsorbiert wurden, werden nun desorbiert und mit dem Regeneriergas aus der Adsorberstation ausgetragen. Anschließend stehen die regenerierten Adsorber wieder für die Rohgasreinigung bereit.

Die Selektivität der eingesetzten Adsorptionsmittel ist zwar hoch, jedoch wird neben den unerwünschten Stoffen auch CO - wenn auch in geringerem Maß - co-adsorbiert und aus dem Rohgas entfernt. Ist der Partialdruck des Kohlenmonoxids im Regeneriergas geringer als im Rohgas, wird ein Teil des adsorbierten CO bei der Regenerierung desorbiert. Da in der nächsten Adsorptionsphase (Reinigung des Rohgases) wieder CO aus dem Rohgas adsorbiert wird, kann eine solchermaßen durchgeführte Adsorberregenerierung zu Schwankungen der Zusammensetzung des in die kryogene Gaszerlegungseinheit eintretenden Einsatzstoffstromes und folglich auch der an der Anlagengrenze abgegebenen Produktmengen führen.

Handelt es sich bei dem Rohgas um ein Synthesegas, so treten bei dieser Verfahrensweise die oben beschriebenen negativen Erscheinungen auf, da der CO-Gehalt des Permeats aus der Membraneinheit mit ca. 1,5mol-% wesentlich niedriger liegt, als der CO-Gehalt des Synthesegases. Nach einer Ausgestaltung des erfindungsgemäßen Verfahrens wird vorgeschlagen, das CO-haltige Flash-Gas (CO-Gehalt ca. 20mol-%) vor seiner Einspeisung in das Permeat für die Vorbeladung der Adsorber mit CO zu verwenden, um so den CO-Einbruch im Einsatzstoffstrom beim Umschalten der Adsorber der Adsorberstation zu reduzieren.

Bei hohem Druck und CO-Gehalt des Einsatzstoffstromes reicht die durch Entspannung erzeugte Kälte aus, um den Kältebedarf der kryogenen Gaszerlegungseinheit zu decken. Bei niedrigem Rohgasdruck und/oder geringem CO-Gehalt ist es notwendig, zusätzlich Kälte in den Prozess einzubringen.

Eine weitere Ausgestaltung des erfindungsgemäßen Verfahrens sieht vor, zur Deckung des Kältebedarfs der kryogenen Gaszerlegungseinheit flüssigen Stickstoff (N₂) von jenseits der Anlagengrenzen einzubringen, gegen abzukühlende Verfahrensströme zu verdampfen, anzuwärmen und in die Atmosphäre abzugeben. Bevorzugt wird der Stickstoff zur Spülung der sog. Cold-Box, in der die kryogene Gaszerlegungseinheit untergebracht ist, verwendet, bevor er in die Atmosphäre abgegeben wird.

Für den Fall, dass der Kältebedarf der kryogenen Gaszerlegungseinheit die durch Entspannung erzielbare Kälteleistung sehr stark übersteigt, d. h. der Bedarf an flüssigem Stickstoff von jenseits der Anlagengrenzen sehr hoch ist, wird zweckmäßigerweise der Flüssig-N₂ durch einen Wärmetauscher geführt, der sich in demjenigen Abscheider befindet, in welchem das Flüssigkeits-Gas-Gemisch nach der einstufigen partiellen Kondensation des Einsatzstoffstromes getrennt wird. Die H₂-reiche, CO-haltige Gasfraktion wird gegen den flüssigen Stickstoff weiter abgekühlt und ein Teil des enthaltenen CO auskondensiert, wodurch sich die CO-Ausbeute des einstufigen Kondensationsprozesses erhöht.

Wird der Einsatzstoffstrom aus einem Synthesegas gewonnen, so ist eine CO₂-Wäsche vorhanden, in welcher das Synthesegas einer Grobreinigung unterzogen wird. Falls aus dem Synthesegas ein H₂-Produkt mit einem so hohen Druck gewonnen werden soll, dass kein Druckgefälle für den Betrieb einer Membraneinheit zur Verfügung steht, sieht eine weitere Ausgestaltung des erfindungsgemäßen Verfahrens vor, die H₂-Fraktion aus dem Abscheider, in welchem das Flüssigkeits-Gas-Gemisch nach der partiellen Kondensation des Einsatzstoffstromes getrennt wird, nach Anwärmung gegen abzukühlende Verfahrensströme zur Adsorberregenerierung zu verwenden und anschließend direkt in einer Druckwechseladsorptionsanlage auf Produktqualität zu reinigen. Das CO-haltige Restgas aus der Druckwechseladsorptionsanlage wird mittels Verdichter (Recycleverdichter) vor die CO₂-Wäsche zurückgeführt und in das Synthesegas eingespeist. Bei dieser Konfiguration wird bevorzugt auch das Flash-Gas aus der Trennkolonne, nach Anwärmung gegen abzukühlende Verfahrensströme, vor die CO₂-Wäschezurück geführt. Da der Druck des Flash-Gases in der Regel deutlich höher ist als der Druck des DWA-Restgases, erfolgt die Rückführung bevorzugt über eine Zwischeneinspeisung am Recycleverdichter (falls dieser mehrstufig ausgeführt wird). Auf diese Weise erhöhen sich H₂- und CO-Ausbeute des Verfahrens auf annähernd 100%.

Die Erfindung betrifft ferner eine Vorrichtung zur Gewinnung eines gasförmigen Kohlenmonoxidproduktes durch Zerlegung eines vorwiegend aus Wasserstoff (H₂) und Kohlenmonoxid (CO) bestehenden Einsatzstoffstromes, bestehend aus einer kryogenen Gaszerlegungseinheit, die neben Leitungen zur Führung von Verfahrensströmen zumindest einen Wärmetauscher, in dem der Einsatzstoffstrom gegen anzuwärmende Verfahrensströme abgekühlt und partiell kondensiert wird, eine Trennkolonne, in der das bei der partiellen Kondensation gebildete und in einem Abscheider von der H₂-reichen, CO-haltigen Gasfraktion abgetrennte CO-reiche, H₂-haltige Kondensat einer Tieftemperaturfraktionierung unterzogen wird, wobei als Sumpfprodukt in der Trennkolonne Produktreinhiet aufweisendes Flüssig-Co erzeugt und auschließend in einen Wärmetauscher zur Verdampfung und /oder Anwärmung eingeleitet wird, sowie einen bevorzugt mehr als eine Verdichtersektion aufweisenden CO-Verdichter zur Verdichtung des gasförmigem CO auf Produktdruck umfasst.

Vorrichtungsseitig wird die gestellte Aufgabe erfindungsgemäß dadurch gelöst, dass eine Einrichtung zur Unterkühlung des Flüssig-CO aus dem Sumpf der Trennkolonne und zur Aufteilung desselben in mindestens zwei Teilströme vorgesehen ist, wobei jeder der Teilströme nach der Unterkühlung über ein einstellbares Drosselorgan auf ein jeweils anderes Druckniveau entspannbar, anschließend in einen Wärmetauscher zur Verdampfung und/oder Anwärmung einleitbar und schließlich gasförmig entweder der Saugseite einer Verdichtersektion des CO-Verdichters oder direkt dem CO-Produkt zuführbar ist.

Zweckmäßiger Weise werden die Einrichtungen, in denen Verfahrensströme gekühlt bzw. angewärmt werden als Plattenwärmetauscher ausgeführt.

Bevorzugt erfolgt die Aufteilung des Flüssig-CO aus dem Sumpf der Trennkolonne in wenigstens zwei und maximal n+1 Teilströme, wobei n die Anzahl der Verdichtersektionen des CO-Verdichters bezeichnet. Zumindest bei der Ausführung mit n+1 Teilströmen, ist ein Teilstrom (nach Verdampfung und Anwärmung) gasförmig ohne weitere Verdichtung in den CO-Produktstrom einleitbar.

Die Verteilung des Flüssig-CO auf die Teilströme ist erfindungsgemäß über die Drosselorgane so einstellbar, dass die gewünschte Abkühlung des Einsatzstoffstromes erreicht und gleichzeitig die Verdichterleistung minimiert wird.

Ist ein ausreichend hohes Druckgefälle zwischen der bei der partiellen Kondensation des Einsatzstoffstromes gewonnenen H₂-reichen, CO-haltigen Gasfraktion und dem Wasserstoffprodukt vorhanden, so weist die erfindungsgemäße Vorrichtung zur Steigerung der CO-Ausbeute zweckmäßigerweise eine außerhalb der kryogenen Gaszerlegungseinheit angeordnete Membraneinheit auf, in welcher der Wasserstoff aus der bei der partiellen Kondensation gewonnenen H₂-reichen, CO-haltigen, gegen abzukühlende Verfahrensströme angewärmten Gasfraktionen weitgehend abtrennbar ist. Das verbleibende CO/H₂-Gemisch (Retentat) ist zur Erhöhung der CO-Ausbeute in die kryogene Zerlegungseinheit rückführbar. Ist zur Erzeugung des Einsatzstoffstromes (z. B. aus einem Synthesegas) eine Adsorberstation vorhanden, wird der in der Membraneinheit abgetrennte Wasserstoff (Permeat) bevorzugt so weiter geführt, dass mit ihm die Adsorber der Adsorberstation regenerierbar sind.

Eine andere Ausgestaltung der erfindungsgemäßen Vorrichtung sieht einen Verdichter vor, mit dem der Druck des gegen abzukühlende Verfahrensströme angewärmten, vom Kopf der Trennkolonne abgezogenen H₂-reichen, CO-haltigen sog. Flash-Gases soweit anhebbar ist, dass es in das Permeat einspeisbar ist.

Ist kein ausreichend hohes Druckgefälle zwischen der bei der partiellen Kondensation gewonnenen H₂-reichen, CO-haltigen Gasfraktionen und dem Wasserstoffprodukt vorhanden und soll neben CO auch Reinwasserstoff als Produkt hergestellt werden, so weist die Vorrichtung bevorzugt eine Druckwechseladsorptionsanlage (DWA) auf, in der die aus der kryogenen Gaszerlegungseinheit kommende H₂-Fraktion reinigbar ist. Durchläuft das zu trennende Gas eine CO₂-Wäsche, bevor es als Einsatzstoffstrom in die kryogene Zerlegungseinheit geleitet wird, so ist das CO-haltige Restgas aus der DWA sowie das H₂-reiche, CO-haltige Flash-Gas zweckmäßig in das Rohgas vor die CO₂-Wäsche rückführbar. Hierzu ist die erfindungsgemäße Vorrichtung mit einem Verdichter ausgestattet, mit dem die Drücke des DWA Restgases und des Flash-Gases auf den für die Rückführung notwendigen Wert anhebbar sind.

Falls es notwendig ist, zur Deckung des Kältebedarfes der kryogenen Gaszerlegungseinheit flüssigen Stickstoff von jenseits der Anlagengrenzen zu importieren, sieht eine weitere Ausgestaltung der erfindungsgemäßen Vorrichtung vor, den Abscheider, in welchem das Flüssigkeits-Gas-Gemisch nach der einstufigen partiellen Kondensation des Einsatzstoffstromes getrennt wird, mit einem Wärmetauscher zu versehen, durch den der flüssige Stickstoff als Kühlmittel leitbar ist. Der Wärmetauscher ist als Plattenwärmetauscher oder als gewickelten Wärmetauscher ausgeführt.

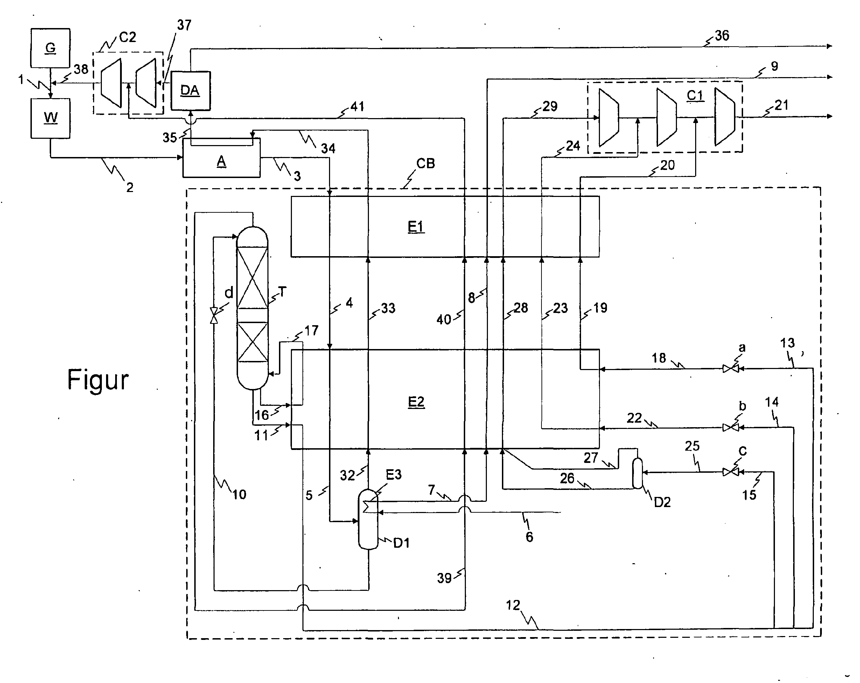

Im Folgenden soll die Erfindung anhand eines in der Figur dargestellten Ausführungsbeispiels näher erläutert werden:

Das vorliegende Ausführungsbeispiel betrifft ein Verfahren zu kryogenen Gewinnung eines CO- und eines H₂-Produktes aus einem Syntheserohgasstrom, wobei ein dreistufiger CO-Verdichter zur Erzeugung des CO-Produktdruckes eingesetzt wird. Der CH₄-Gehalt des Syntheserohgases ist so gering, dass auf eine CH₄-Entfemung aus dem CO-Produkt verzichtet werden kann.

Aus dem Gaserzeuger G strömt das Synthesegas über die Leitung 1 in die CO₂-Wäsche W, wo es zum größten Teil von CO₂, aber auch von Wasser und anderen unerwünschten Stoffen gereinigt wird. Das vorgereinigte Synthesegas gelangt über die Leitung 2 in die Adsorberstation A und wird hier von den noch verbliebenen Resten an Wasser und CO₂ befreit. Anschließend wird das gereinigte Synthesegas als Einsatzstoffstrom über die Leitung 3 in die in der Cold-Box CB untergebrachte kryogene Gaszerlegungseinheit geleitet, wo es zunächst im Wärmetauscher E1 und anschließend im Wärmetauscher E2, den es über Leitung 4 erreicht, abgekühlt wird. Im Wärmetauscher E2 entsteht aus dem Einsatzstoffstrom durch Kondensation ein Phasengemisch, das über Leitung 5 dem Abscheider D1 zugeleitet und dort in eine vorwiegend aus CO bestehende Flüssig- und eine H₂-reiche, CO-haltige Gasfraktion getrennt wird. Die Menge der Flüssigfraktion in D1, wird durch das aus der Gasfraktion im Wärmetauscher E3 auskondensierte CO vergrößert. Der Wärmetauscher E3 ist in den Abscheider D1 integriert und wird mittels Flüssigstickstoff gekühlt, der über Leitung 6 von jenseits der Anlagengrenzen zugeführt wird. Über die Leitungen 7 und 8 wird der Stickstoff zu den Wärmetauschern E2 und E1 geführt und gegen abzukühlende Verfahrensströme angewärmt, bevor er über Leitung 9 die Anlage in die Atmosphäre verlässt.

Die CO-reiche Flüssigfraktion wird aus dem Abscheider D1 über die Leitung 10 und das Ventil d auf den Kopf der H₂-Strippkolonne T aufgegeben, wo der noch in ihr gelöste Wasserstoff zum größten Teil ausgestrippt wird. Die CO-reiche Flüssigkeit, die bereits Produktqualität aufweist, wird im Sumpf der H₂-Strippkolonne T gesammelt, von wo sie über die Leitung 11 durch den Wärmetauscher E2 geführt und dabei unterkühlt wird. Über Leitung 12 wird die unterkühlte CO-reiche Flüssigkeit aus dem Wärmetauscher E2 abgezogen, bevor sie auf die Leitungen 13, 14 und 15 aufgeteilt wird. Die H₂-Strippkolonne T wird über einen im Wärmetauscher E2 integrierten Reboiler, mit dem sie über die Leitungen 16 und 17 verbunden ist, beheizt.

Der Teilstrom in Leitung 13 wird über die Drosselstelle a auf den Eintrittsdruck der Mitteldruckstufe des CO-Verdichters C1 (zuzüglich der Druckverluste der Wärmetauscher E1 und E2 sowie der Rohrleitungen) entspannt. Wegen der vorangegangenen Unterkühlung kommt es nicht zur Bildung einer Gasphase. Die entspannte Flüssigkeit wird durch die Leitungen 18 und 19 durch die beiden Wärmetauscher E2 und E1 geleitet, wobei die sie verdampft und das gasförmige CO angewärmt wird. Das CO wird schließlich über Leitung 20 dem CO-Verdichter C1 auf dessen Mitteldruckschiene aufgegeben, mit dem CO aus den beiden ersten Sektionen des CO-Verdichters C1 gemischt, auf Produktdruck verdichtet und über Leitung 21 als CO-Produkt abgegeben.

Der Teilstrom in Leitung 14 wird über die Drosselstelle b auf den Eintrittsdruck der Niederdruckstufe des CO-Verdichters C1 (zuzüglich der Druckverluste der Wärmetauscher E1 und E2 sowie der Rohrleitungen) entspannt. Auch hier kommt es aufgrund der vorangegangenen Unterkühlung nicht zur Bildung einer Gasphase. Die entspannte Flüssigkeit wird durch die Leitungen 22 und 23 durch die beiden Wärmetauscher E2 und E1 geleitet, wobei die sie verdampft und das gasförmige CO angewärmt wird. Das CO wird schließlich über Leitung 24 dem CO-Verdichter C1 auf dessen Niederdruckschiene aufgegeben, mit dem CO aus der ersten Sektion des CO-Verdichters C1 gemischt, auf das Mitteldruckniveau verdichtet und schließlich zusammen mit den gasförmigen Strom 20 ebenfalls auf Produktdruck verdichtet und über Leitung 21 als CO-Produkt abgegeben.

Der letzte Teilstrom in Leitung 15 wird über die Drosselstelle c auf den Ansaugdruck der des CO-Verdichters C1 (zuzüglich der Druckverluste der Wärmetauscher E1 und E2 sowie der Rohrleitungen) entspannt. Wegen des großen Druckgefälles kommt es hier - trotz vorangegangener Unterkühlung - zu einer Teilverdampfung. Das dabei gebildete Flüssigkeits-Gas-Gemisch, das die Spitzenkälte für das kalte Ende des Wärmetauschers E2 liefert, wird über die Leitung 25 dem Abscheider D2 zugeleitet und dort in eine Flüssig- und eine Gasphase getrennt. Flüssig- und Gasphase werden über die Leitungen 26 und 27 aus D2 entnommen und der kalten Seite des Wärmetauscheres E2 zugeführt, wo die Flüssigfraktion 26 verdampft und gemeinsam mit der Gasfraktion 27 angewärmt wird. Der nun vollständig gasförmige CO-Strom wird über Leitung 28 zum Wärmetauscher E1 geleitet, dort weiter angewärmt, über Leitung 29 dem CO-Verdichter C1 auf dessen Saugseite aufgegeben, auf Niederdruckniveau verdichtet, zusammen mit den beiden anderen CO Strömen 24 und 20 in den beiden folgenden Verdichtersektionen auf Produktdruck verdichtet und über Leitung 21 als CO-Produkt abgegeben.

Zu den beiden unteren Druckstufen wird nur soviel Flüssig-CO geleitet, um die gewünschte Abkühlung des Einsatzstoffstromes zu erreichen. Durch die Unterkühlung wird die bei den Entspannungen gebildete Gasmenge, die nur einen geringen Beitrag zur Abkühlung des Einsatzstoffstromes leistet, minimiert. Dadurch wird der Anteil der für die Abkühlung des Einsatzstoffstromes notwendigen, auf niedrigen Druckniveaus verdampften und gasförmig dem CO-Verdichter zugeführten Teilströme reduziert und damit der Energiebedarf für die CO-Verdichtung im Vergleich zum Stand der Technik gesenkt

Die bei der partiellen Kondensation des Einsatzstoffstromes gebildete H₂-reiche, CO-haltige Gasfraktion wird aus dem Abscheider D1 abgezogen, in den beiden Wärmetauschern E2 und E1, denen sie über die Leitungen 32 und 33 zugeführt wird, angewärmt und über Leitung 34 zur Regenerierung der Adsorber in der Adsorberstation A geführt. Nach der Adsorberregenerierung gelangt das Gas über Leitung 35 zur Druckwechseladsorptionsanlage DA, wird dort gereinigt und über Leitung 36 als H₂-Produkt abgegeben.

Das CO-haltige Restgas aus der Druckwechseladsorptionsanlage DA wird über Leitung 37 dem Verdichter C2 zugeführt, dort verdichtet und über Leitung 38 vor der CO₂-Wäsche W in das Synthesegas 1 eingeleitet.

Das vom Kopf der H₂-Strippkolonne T abgezogene sog. Flash-Gas besteht zum überwiegenden Teil aus Wasserstoff; wegen seines Kohlenmonoxidgehaltes weist es allerdings keine Produktreinheit auf. Über die Leitungen 39 und 40 gelangt es nacheinander zu den beiden Wärmetauschern E2 und E1, wo es angewärmt wird. Anschließend wird es über Leitung 41 dem Verdichter C2 als Zwischeneinspeisung aufgegeben und gemeinsam mit dem Restgas 37 aus der Druckwechseladsorptionsanlage DA über Leitung 38 in das Synthesegas 1 eingeleitet.

## Patentansprüche

1. Verfahren zur Gewinnung eines gasförmigen Kohlenmonoxidproduktstromes (21) durch Zerlegung eines vorwiegend aus Wasserstoff (H₂) und Kohlenmonoxid (CO) bestehenden Einsatzstoffstroms (3) in einer kryogenen Gaszerlegungseinheit mittels Abkühlung durch indirekten Wärmetausch gegen anzuwärmende Verfahrensströme (E1, E2) und einstufiger partieller Kondensation mit anschließender Tieftemperaturfraktionierung des bei der partiellen Kondensation gebildeten und in einem Abscheider (D1) von der H₂-reichen, CO-haltigen Gasfraktion (32) abgetrennten CO-reichen, H₂-haltigen Kondensats (10) in einer Trennkolonne (T), in welcher Flüssig-CO mit Produktreinheit als Sumpfprodukt erzeugt wird, der Verdampfung und/oder Anwärmung der kalten Zerlegungsprodukte und der Verdichtung von gasförmigem CO auf Produktdruck mittels eines eine oder mehrere Verdichtersektionen aufweisenden CO-Verdichters (C1), wobei das aus dem Sumpf der Trennkolonne (T) abgezogene Flüssig-CO (11) gegen anzuwärmende Verfahrensströme unterkühlt und anschließend in mehrere Teilströme (13,14,15) aufgespalten wird, die jeweils auf ein anderes Druckniveau (a,b,c) entspannt, gegen abzukühlende Verfahrensströme verdampft, angewärmt und gasförmig dem CO-Verdichter (C1) oder direkt dem CO-Produkt (21) zugeführt werden, wobei die Unterkühlung vorzugsweise so groß ist, dass lediglich bei der Entspannung auf das niedrigste Druckniveau (c) ein Flüssigkeits-Gas-Gemisch (25) entsteht, das in einem Abscheider (D2) getrennt wird.

2. Verfahren nach Anspruch 1, **dadurch gekennzeichnet, dass** die Größen der Flüssig-CO-Teilströme(13,14,15) so gewählt werden, dass die gewünschte Abkühlung des Einsatzstoffstromes (3) bei gleichzeitiger Minimierung der zur Verdichtung des CO-Produktstromes (21) benötigten Leistung erreicht wird.

3. Verfahren nach einem der Ansprüche 1 oder 2, **dadurch gekennzeichnet, dass** jeder der zum CO-Verdichter geführten CO-Teilströme (20,24,29) dem CO-Verdichter (C1) an der Saugseite einer anderen Verdichtersektion aufgegeben wird.

4. Verfahren nach einem der Ansprüche 1 bis 3, **dadurch gekennzeichnet, dass** das Flüssig-CO (11) aus dem Sumpf der Trennkolonne (T) so stark unterkühlt wird, dass lediglich bei der Entspannung auf das niedrigste Druckniveau (c) ein Flüssigkeits-Gas-Gemisch (25) entsteht.

5. Verfahren nach einem der Ansprüche 1 bis 4, **dadurch gekennzeichnet, dass** die während der partiellen Kondensation gebildete und von der CO-reichen, H₂-haltigen Flüssigphase abgetrennte H₂-reiche und CO-haltige Gasphase (10) durch indirekten Wärmetausch gegen abzukühlende Verfahrensströme angewärmt wird.

6. Verfahren nach einem der Ansprüche 1 bis 5, **dadurch gekennzeichnet, dass** die vom Kopf der Trennkolonne (T) abgezogene H₂-reiche, CO-haltige, gasförmige Fraktion (39) (Flash-Gas) durch indirekten Wärmetausch (E2,E1) gegen abzukühlende Verfahrensströme (E1,E2) angewärmt wird.

7. Verfahren nach einem der Ansprüche 1 bis 6, **dadurch gekennzeichnet, dass** der Einsatzstoffstrom (3) für die kryogene Gaszerlegungseinheit(CB) aus einem Synthesegas (1) durch Reinigung in einer CO₂-Wäsche(W) und einer Adsorberstation (A) gewonnen wird.

8. Verfahren nach Anspruch 7, **dadurch gekennzeichnet, dass** zumindest ein Teil (34) der während der einstufigen partiellen Kondensation gebildeten und von der CO-reichen, H₂-haltigen Flüssigfraktion abgetrennten H₂-reichen und CO-haltigen Gasfraktion (32) aus dem Abscheider (D1) nach ihrer Anwärmung zur Regenerierung der Adsorber in der Adsorberstation (A) verwendet wird.

9. Verfahren nach einem der Ansprüche 7 oder 8, **dadurch gekennzeichnet, dass** die gesamte Gasfraktion (32) aus dem Abscheider (D1) nach ihrer Anwärmung (34) in einer Membraneinheit in eine Wasserstofffraktion und ein CO/H₂-Gemisch (Retentat) aufgetrennt wird, bevor zumindest ein Teil der Wasserstofffraktion zur Regenerierung der Adsorber in der Adsorberstation (A) verwendet wird und das Retentat nach Abkühlung gegen anzuwärmende Verfahrensströme der Trennkolonne (T) zur Gewinnung des in ihr enthaltenen Kohlenmonoxids aufgegeben wird.

10. Verfahren nach einem der Ansprüche 7 bis 9, **dadurch gekennzeichnet, dass** das zur Regenerierung der Adsorber in der Adsorberstation (A) verwendete, und daher verunreinigte Gas (35) in einer Druckwechseladsorberstation(DA) gereinigt und anschließend als Wasserstoffprodukt (36) an der Anlagengrenze abgegeben wird.

11. Verfahren nach Anspruch 10, **dadurch gekennzeichnet, dass** das Restgas (37,38) aus der Druckwechseladsorptionsanlage(DA) in das Synthesegas (1) vor der CO₂-Wäsche (W) zurückgeführt wird.

12. Verfahren nach einem der Ansprüche 1 bis 11, **dadurch gekennzeichnet, dass** zur Deckung von zumindest einem Teil des Kältebedarfs des Verfahrens flüssiger, Stickstoff (6) von jenseits der Anlagengrenzen zugeführt und gegen abzukühlende Verfahrensströme verdampft, angewärmt (E1,E2,E3) und anschließend (6) in die Atmosphäre abgegeben wird (9).

13. Verfahren nach einem der Ansprüche 1 bis 12, **dadurch gekennzeichnet, dass** der flüssige Stickstoff (6) in einem Wärmetauscher (E3) verdampft wird, der im Abscheider (D1) zur Trennung des bei der partiellen Kondensation des Einsatzstoffstromes (3) entstehende Flüssigkeits-Gas-Gemisches (5) integriert ist, wodurch ein Teil des in der Gasfraktion enthaltenen CO auskondensiert wird.

14. Vorrichtung zur Gewinnung eines gasförmigen Kohlenmonoxidproduktes (21) durch Zerlegung eines vorwiegend aus Wasserstoff (H₂) und Kohlenmonoxid (CO) bestehenden Einsatzstoffstromes (3), bestehend aus einer kryogenen Gaszerlegungseinheit, die neben Leitungen zur Führung von Verfahrensströmen zumindest einen Wärmetauscher (E1,E2), in dem der Einsatzstöffstrom (3) gegen anzuwärmende Verfahrensströme abgekühlt und partiell kondensiert wird, eine Trennkolonne (T), in der das bei der partiellen Kondensation gebildete und in einem Abscheider (D1) von der H₂-reichen, CO-haltigen Gasfraktion (32) abgetrennte CO-reiche, H₂-haltige Kondensat (10) einer Tieftemperaturfraktionierung unterzogen wird wobei als Sumpfprodukt in der Trennkolonne Produktreinheit aufweisendes Flüssig-Co erzeugt wird, sowie einen bevorzugt mehr als eine Verdichtersektion aufweisenden CO-Verdichter (C1) zur Verdichtung des gasförmigem CO auf Produktdruck umfasst wobei eine Einrichtung (E2) zur Unterkühlung des Flüssig-CO (11) aus dem Sumpf der Trennkolonne (T) und zur Aufteilung desselben in mindestens zwei Teilströme (13,14,15) vorgesehen ist, wobei jeder der Teilströme (13,14,15) nach der Unterkühlung über ein einstellbares Drosselorgan (a,b,c) auf ein jeweils anderes Druckniveau entspannbar, anschließend in einen Wärmetauscher (E2,E1) zur Verdampfung und/oder Anwärmung einleitbar und schließlich gasförmig (20,24,29) entweder der Saugseite einer Verdichtersektion des CO-Verdichters (C1) oder direkt dem CO-Produkt (21) zuführbar ist.

15. Vorrichtung nach Anspruch 14, **dadurch gekennzeichnet, dass** das Flüssig-CO (12) aus dem Sumpf der Trennkolonne (T) in wenigstens zwei und maximal n+1 Teilströme aufteilbar ist, wobei n die Anzahl der Verdichtersektionen des CO-Verdichters (C1) bezeichnet.

16. Vorrichtung nach einem der Ansprüche 14 oder 15, **dadurch gekennzeichnet, dass** Einrichtungen (E1,E2), in denen Verfahrensströme gekühlt bzw. angewärmt werden als Plattenwärmetauscher ausgeführt sind.

17. Vorrichtung nach einem der Ansprüche 14 bis 16, **dadurch gekennzeichnet, dass** sie zur Abtrennung des Wasserstoffs aus dem bei der partiellen Kondensation gebildeten H₂-reichen, CO-haltigen Gasgemisches (32) mit einer Membraneinheit, die nicht Teil der kryogenen Gaszerlegungseinheit ist, ausgestattet ist.

18. Vorrichtung nach einem der Ansprüche 14 bis 16, **dadurch gekennzeichnet, dass** sie zur Gewinnung eines Wasserstoffproduktes (36) mit einer Druckwechseladsorptionsanlage (DA), die nicht Teil der kryogenen Gaszerlegungseinheit ist, versehen ist.

19. Vorrichtung nach einem der Ansprüche 14 bis 18, **dadurch gekennzeichnet, dass** der Abscheider (D1) zur Trennung des bei der einstufigen partiellen Kondensation gebildeten Flüssigkeits-Gas-Gemisches (5) mit einem Wärmetauscher (E3) versehen ist, der mit flüssigem Stickstoff (6) von jenseits der Anlagengrenze gekühlt wird.

20. Vorrichtung nach Anspruch 19, **dadurch gekennzeichnet, dass** es sich bei dem Wärmetauscher (E3) um einen gewickelten Wärmetauscher handelt.

21. Vorrichtung nach Anspruch 19, **dadurch gekennzeichnet, dass** es sich bei dem Wärmetauscher (E3) um einen Plattenwärmetauscher handelt.

## Claims

1. Method for obtaining a gaseous carbon monoxide product stream (21) by fractionating a feed stream (3) predominantly consisting of hydrogen (H₂) and carbon monoxide (CO) in a cryogenic gas fractionation unit by means of cooling by indirect heat exchange against process streams (E1, E2) to be warmed and single-stage partial condensation with subsequent low-temperature fractionation of the CO-rich, H₂-containing condensate (10) formed in the partial condensation and separated off in a separator (D1) from the H₂-rich, CO-containing gas fraction (32) in a separation column (T), in which liquid CO is produced with product purity as bottom product, vaporization and/or warming of the cold fractionation products and compression of gaseous CO to product pressure by means of a CO compressor (C1) having one or more compressor sections, the liquid CO (11) taken off from the bottom of the separation column (T) being subcooled against process streams to be warmed and subsequently divided into a plurality of substreams (13, 14, 15) which are each expanded to a different pressure level (a, b, c), vaporized and warmed against process streams to be cooled, and fed in the gaseous state to the CO compressor (C1) or directly to the CO product (21), subcooling preferably being to an extent that only in the expansion to the lowest pressure level (c) is a liquid-gas mixture (25) formed which is separated in a separator (D2).

2. Method according to Claim 1, **characterized in that** the characteristics of the liquid CO substreams (13, 14, 15) are selected in such a manner that the desired cooling of the feed stream (3) is achieved with a simultaneous minimization of the power required for compression of the CO product stream (21).

3. Method according to either of Claims 1 or 2, **characterized in that** each of the CO substreams (20, 24, 29) fed to the CO compressor (C1) is applied to the CO compressor on the suction side of another compressor section.

4. Method according to one of Claims 1 to 3, **characterized in that** liquid CO (11) from the bottom of the separation column (T) is subcooled so greatly that only on expansion to the lowest pressure level (c) is a liquid-gas mixture (25) formed.

5. Method according to one of Claims 1 to 4, **characterized in that** the H₂-rich and CO-containing gas phase (10) which is formed during the partial condensation and separated off from the CO-rich, H₂-containing liquid phase is warmed by indirect heat exchange against process streams to be cooled.

6. Method according to one of Claims 1 to 5, **characterized in that** the H₂-rich, CO-containing gaseous fraction (39) (flash gas) taken off from the head of the separation column (T) is warmed by indirect heat exchange (E2, E1) against process streams (E1, E2) to be cooled.

7. Method according to one of Claims 1 to 6, **characterized in that** the feed stream (3) for the cryogenic gas fractionation unit (CB) is obtained from a synthesis gas (1) by purification in a CO₂ scrubber (W) and an adsorber station (A).

8. Method according to Claim 7, **characterized in that** at least a part (34) of the H₂-rich and CO-containing gas fraction (32) from the separator (D1) which is formed during the single-stage partial condensation and is separated off from the CO-rich, H₂-containing liquid fraction, after it is warmed is used for regenerating the adsorbers in the adsorber station (A).

9. Method according to one of Claims 7 or 8, **characterized in that** the entire gas fraction (32) from the separator (D1), after it is warmed (34), is separated in a membrane unit into a hydrogen fraction and a CO/H₂ mixture (retentate), before at least one part of the hydrogen fraction is used for regenerating the adsorbers in the adsorber station (A) and the retentate after cooling against process streams to be warmed is applied to the separation column (T) for obtaining the carbon monoxide present in it.

10. Method according to one of Claims 7 to 9, **characterized in that** the gas (35) which is used for regenerating the adsorbers in the adsorber station (A) and therefore contaminated, is purified in a pressure-swing adsorber station (DA) and subsequently delivered as hydrogen product (36) at the plant boundary limits.

11. Method according to Claim 10, **characterized in that** the residue gas (37, 38) from the pressure-swing adsorption unit (DA) is recirculated to the synthesis gas (1) upstream of the CO₂ scrubber (W).

12. Method according to one of Claims 1 to 11, **characterized in that**, to cover at least a part of the refrigeration requirement of the method, liquid nitrogen (6) is fed from outside the plant boundary limits and vaporized and warmed (E1, E2, E3) against process streams to be cooled and subsequently (6) released (9) to the atmosphere.

13. Method according to one of Claims 1 to 12, **characterized in that** the liquid nitrogen (6) is vaporized in a heat exchanger (E3) which is integrated in the separator (D1) for separating the liquid-gas mixture (5) formed in the partial condensation of the feed stream (3), as a result of which a part of the CO present in the gas fraction is condensed out.

14. Apparatus for obtaining a gaseous carbon monoxide product (21) by fractionating a feed stream (3) predominantly consisting of hydrogen (H₂) and carbon monoxide (CO) consisting of a cryogenic gas fractionation unit which, in addition to lines for passing process streams, comprises at least one heat exchanger (E1, E2) in which the feed stream (3) is cooled and partially condensed against process streams to be warmed, a separation column (T) in which the CO-rich, H₂-containing condensate (10) which is formed in the partial condensation and is separated off in a separator (D1) from the H₂-rich, CO-containing gas fraction (32) is subjected to a low-temperature fractionation, liquid CO having product purity being produced as bottom product in the separation column, and also a CO compressor (C1) having preferably more than one compressor section for compressing the gaseous CO to product pressure, a device (E2) for subcooling the liquid CO (11) from the bottom of the separation column (T) and for dividing the same into at least two substreams (13, 14, 15) being provided, each of the substreams (13, 14, 15), after the subcooling, being expandable to a respectively different pressure level via an adjustable throttle element (a, b, c), subsequently introducible into a heat exchanger (E2, E1) for vaporizing and/or warming and finally being feedable in the gaseous state (20, 24, 29) either to the suction side of a compressor sector of the CO compressor (C1) or directly to the CO product (21).

15. Apparatus according to Claim 14, **characterized in that** the liquid CO (12) from the bottom of the separation column (T) is dividable into at least two and at most n + 1 substreams, where n designates the number of compressor sections of the CO compressor (C1).

16. Apparatus according to either of Claims 14 or 15, **characterized in that** devices (E1, E2) in which process streams are cooled or warmed are constructed as plate heat exchanger.

17. Apparatus according to one of Claims 14 to 16, **characterized in that**, for separating off the hydrogen from the H₂-rich, CO-containing gas mixture (32) formed in the partial condensation, it is equipped with a membrane unit which is not part of the cryogenic gas fractionation unit.

18. Apparatus according to one of Claims 14 to 16, **characterized in that**, for obtaining a hydrogen product (36), it is provided with a pressure-swing adsorption unit (DA) which is not part of the cryogenic gas fractionation unit.

19. Apparatus according to one of Claims 14 to 18, **characterized in that** the separator (D1), for separation of the liquid-gas mixture (5) formed in the single-stage partial condensation, is provided with a heat exchanger (E3) which is cooled with liquid nitrogen (6) from outside the plant boundary limits.

20. Apparatus according to Claim 19, **characterized in that** the heat exchanger (E3) is a coiled heat exchanger.

21. Apparatus according to Claim 19, **characterized in that** the heat exchanger (E3) is a plate heat exchanger.

## Revendications

1. Procédé de récupération d'un courant produit de monoxyde de carbone (21) par décomposition d'un courant de matières premières (3) principalement constitué d'hydrogène (H₂) et de monoxyde de carbone (CO) dans une unité de décomposition de gaz cryogène par refroidissement par échange de chaleur indirect contre des courants de procédé à chauffer (E1, E2) et condensation partielle à une étape avec fractionnement à basse température ultérieur du condensat riche en CO contenant de l'H₂ (10) formé pendant la condensation partielle et séparé dans un séparateur (D1) de la fraction gazeuse (32) riche en H₂ contenant du CO dans une colonne de séparation (T), dans laquelle du CO liquide présentant la pureté du produit est formé en tant que produit de fond, évaporation et/ou chauffage des produits de décomposition froids et compression de CO gazeux à la pression du produit au moyen d'un compresseur de CO (C1) comprenant une ou plusieurs sections de compresseur, le CO liquide (11) soutiré au fond de la colonne de séparation (T) étant sous-refroidi contre des courants de procédé à chauffer, puis séparé en plusieurs courants partiels (13, 14, 15), qui sont détendus chacun à un niveau de pression différent (a, b, c), évaporés contre des courants de procédé à refroidir, chauffés et introduits sous forme gazeuse dans le compresseur de CO (C1) ou directement dans le produit CO (21), le sous-refroidissement étant de préférence tel qu'un mélange liquide-gaz (25), qui est séparé dans un séparateur (D2), ne se forme que lors de la détente au niveau de pression le plus bas (c).

2. Procédé selon la revendication 1, **caractérisé en ce que** les tailles des courants partiels de CO liquide (13, 14, 15) sont choisies de manière à ce que le refroidissement souhaité du courant de matières premières (3) soit obtenu tout en minimisant la puissance nécessaire pour la compression du courant produit de CO (21).

3. Procédé selon l'une quelconque des revendications 1 ou 2, **caractérisé en ce que** chacun des courants partiels de CO (20, 24, 29) introduits dans le compresseur de CO est introduit dans le compresseur de CO (C1) du côté de l'aspiration d'une section de compresseur différente.

4. Procédé selon l'une quelconque des revendications 1 à 3, **caractérisé en ce que** le CO liquide (11) issu du fond de la colonne de séparation (T) est sous-refroidi dans une mesure telle qu'un mélange liquide-gaz (25) ne se forme que lors de la détente au niveau de pression le plus bas (c).

5. Procédé selon l'une quelconque des revendications 1 à 4, **caractérisé en ce que** la phase gazeuse riche en H₂ et contenant du CO (10) formée pendant la condensation partielle et séparée de la phase liquide riche en CO contenant de l'H₂ est chauffée par échange de chaleur indirect contre des courants de procédé à refroidir.

6. Procédé selon l'une quelconque des revendications 1 à 5, **caractérisé en ce que** la fraction gazeuse riche en H₂ contenant du CO (39) (vapeur instantanée) soutirée à la tête de la colonne de séparation (T) est chauffée par échange de chaleur indirect (E2, E1) contre des courants de procédé à refroidir (E1, E2).

7. Procédé selon l'une quelconque des revendications 1 à 6, **caractérisé en ce que** le courant de matières premières (3) pour l'unité de décomposition de gaz cryogène (CB) est obtenu à partir d'un gaz de synthèse (1) par purification dans un épurateur de CO₂ (W) et une station d'adsorption (A).

8. Procédé selon la revendication 7, **caractérisé en ce qu'**au moins une partie (34) de la fraction gazeuse riche en H₂ et contenant du CO (32) formée pendant la condensation partielle à une étape et séparée de la fraction liquide riche en CO, contenant de l'H₂, issue du séparateur (D1), est utilisée après son chauffage pour la régénération de l'adsorbeur dans la station d'adsorption (A).

9. Procédé selon l'une quelconque des revendications 7 ou 8, **caractérisé en ce que** la totalité de la fraction gazeuse (32) issue du séparateur (D1) est séparée après son chauffage (34) dans une unité à membrane en une fraction hydrogène et un mélange CO/H₂ (rétentat), avant qu'au moins une partie de la fraction hydrogène ne soit utilisée pour la régénération de l'adsorbeur dans la station d'adsorption (A) et que le rétentat ne soit introduit après refroidissement contre des courants de procédé à chauffer dans la colonne de séparation (T) pour récupérer le monoxyde de carbone qu'il contient.

10. Procédé selon l'une quelconque des revendications 7 à 9, **caractérisé en ce que** le gaz (35) utilisé pour la régénération de l'adsorbeur dans la station d'adsorption (A), et par conséquent contaminé, est purifié dans une station d'adsorption modulée en pression (DA), puis déchargé sous la forme d'un produit hydrogène (36) à la limite de l'unité.

11. Procédé selon la revendication 10, **caractérisé en ce que** le gaz résiduel (37, 38) issu de l'unité d'adsorption modulée en pression (DA) est recyclé dans le gaz de synthèse (1) avant l'épuration du CO₂ (W).

12. Procédé selon l'une quelconque des revendications 1 à 11, **caractérisé en ce que** pour couvrir au moins une partie des besoins en froid du procédé, de l'azote liquide (6) est introduit depuis en-dehors des limites de l'unité et évaporé contre des courants de procédé à refroidir, chauffé (E1, E2, E3), puis (6) déchargé dans l'atmosphère (9).

13. Procédé selon l'une quelconque des revendications 1 à 12, **caractérisé en ce que** l'azote liquide (6) est évaporé dans un échangeur de chaleur (E3), qui est intégré dans le séparateur (D1) pour la séparation du mélange liquide-gaz (5) formé lors de la condensation partielle du courant de matières premières (3), une partie du CO contenu dans la fraction gazeuse étant condensée.

14. Dispositif pour la récupération d'un produit monoxyde de carbone gazeux (21) par décomposition d'un courant de matières premières (3) principalement constitué d'hydrogène (H₂) et de monoxyde de carbone (CO), constitué par une unité de décomposition de gaz cryogène, qui, outre des conduites pour l'introduction de courants de procédé, comprend au moins un échangeur de chaleur (E1, E2) dans lequel le courant de matières premières (3) est refroidi et partiellement condensé contre des courants de procédé à chauffer, une colonne de séparation (T), dans laquelle le condensat riche en CO contenant de l'H₂ (10) formé pendant la condensation partielle et séparé dans un séparateur (D1) de la fraction gazeuse riche en H₂ contenant du CO (32) est soumis à un fractionnement à basse température, du CO liquide présentant la pureté du produit étant formé en tant que produit de fond dans la colonne de séparation, ainsi qu'un compresseur de CO (C1) comprenant plus d'une section de compresseur pour la compression du CO gazeux à la pression du produit, un appareil (E2) pour le sous-refroidissement du CO liquide (11) issu du fond de la colonne de séparation (T) et pour la séparation de celui-ci en au moins deux courants partiels (13, 14, 15) étant prévu, chacun des courants partiels (13, 14, 15) pouvant après le sous-refroidissement être détendu chacun à un niveau de pression différent par un organe à étranglement ajustable (a, b, c), puis être introduit dans un échangeur de chaleur (E2, E1) pour l'évaporation et/ou le chauffage, et enfin être introduit sous forme gazeuse (20, 24, 29) du côté de l'aspiration d'une section de compresseur du compresseur de CO (C1) ou directement dans le produit CO (21).

15. Dispositif selon la revendication 14, **caractérisé en ce que** le CO liquide (12) issu du fond de la colonne de séparation (T) peut être divisé en au moins deux et au plus n+1 courants partiels, n désignant le nombre de sections de compresseur du compresseur de CO (C1).

16. Dispositif selon l'une quelconque des revendications 14 ou 15, **caractérisé en ce que** des appareils (E1, E2) dans lesquels des courants de procédé sont refroidis ou chauffés sont configurés sous la forme d'échangeur de chaleur à plaques.

17. Dispositif selon l'une quelconque des revendications 14 à 16, **caractérisé en ce qu'**il est équipé pour la séparation de l'hydrogène du mélange gazeux riche en H₂, contenant du CO (32) formé pendant la condensation partielle d'une unité à membrane qui ne fait pas partie de l'unité de décomposition de gaz cryogène.

18. Dispositif selon l'une quelconque des revendications 14 à 16, **caractérisé en ce qu'**il est muni pour la récupération d'un produit hydrogène (36) d'une unité d'adsorption modulée en pression (DA) qui ne fait pas partie de l'unité de décomposition de gaz cryogène.

19. Dispositif selon l'une quelconque des revendications 14 à 18, **caractérisé en ce que** le séparateur (D1) est muni pour la séparation du mélange liquide-gaz (5) formé pendant la condensation partielle à une étape d'un échangeur de chaleur (E3), qui est refroidi avec de l'azote liquide (6) provenant d'en-dehors de la limite de l'unité.

20. Dispositif selon la revendication 19, **caractérisé en ce que** l'échangeur de chaleur (E3) est un échangeur de chaleur enroulé.

21. Dispositif selon la revendication 19, **caractérisé en ce que** l'échangeur de chaleur (E3) est un échangeur de chaleur à plaques.
